# EUROPÄISCHE PATENTSCHRIFT

(11) **EP 1 872 512 B1**
(45) Veröffentlichungstag und Bekanntmachung des Hinweises auf die Patenterteilung: **26.08.2015**
(21) Anmeldenummer: 06722788.4
(22) Anmeldetag: 12.04.2006
(51) Int. Cl.: H04L 9/08, G07F 19/00

(54) **VERFAHREN ZUR SCHLÜSSELVERWALTUNG FÜR KRYPTOGRAPHIEMODULE**
METHOD FOR KEY ADMINISTRATION FOR CRYPTOGRAPHY MODULES
PROCEDE DE GESTION DE CLES POUR MODULES DE CRYPTOGRAPHIE

(30) Priorität: 21.04.2005 DE 102005018676
(43) Veröffentlichungstag der Anmeldung: 02.01.2008
(73) Patentinhaber: Wincor Nixdorf International GmbH, 33106 Paderborn (DE)
(72) Erfinder: NOLTE, Michael, 33034 Brakel (DE)
(86) Internationale Anmeldenummer: PCT/DE2006/000655
(87) Internationale Veröffentlichungsnummer: WO 2006/111135

(56) Entgegenhaltungen:
- EP-A- 1 096 446
- US-A- 5 745 576
- US-A- 5 761 306

## Beschreibung

Die Erfindung betrifft die Schlüsselverwaltung, d.h. die Initialisierung und Aktualisierung, von kryptographischen Schlüsseln, die insbesondere für Bankautomaten oder andere Selbstbedienungsgeräte verwendet werden.

Zur Sicherung von ,Selbstbedienungsgeräten wie insbesondere Geldautomaten gegen unbefugte Benutzung werden kryptographische Verfahren verwendet, deren Sicherheit auf der Sicherheit der Schlüssel beruht. Ein Geldautomat enthält demgemäß ein versiegeltes Kryptographiemodul, in dem ein oder mehrere Schlüssel derart gespeichert sind, daß diese nicht ausgelesen, sondern lediglich für kryptographische Transformationen verwendet werden können, in der Regel nach Freigabe durch eine PIN-Tastatur, die integraler Bestandteil des kryptographischen Prozessors ist.

Aus der Patentschrift US 5,745,576 A ist ein gattungsgemäßes Verfahren zum gesicherten Übertragen eines neuen Schlüssels in ein Kryptographiemodul bekannt, wobei das Kryptographiemodul dafür einen beschreibbaren Schlüsselspeicher und zudem einen weiteren Schlüsselspeicher für einen privaten Basisschlüssel umfasst.

Insbesondere bei der Verwendung symmetrischer Kryptographie ist sicherzustellen, daß der in dem Kryptographiemodul gespeicherte Schlüssel auch im Host, d.h. bei Geldautomaten in der Bankenzentrale, jedoch nur dort, vorhanden ist. Daher sind aufwendige Sicherheitsmaßnamen notwendig, wenn ein Schlüssel erstmalig installiert oder im laufenden Betrieb ausgetauscht werden soll. Ein Austausch im laufenden Betrieb erfolgt standardgemäß dadurch, daß mit dem bisherigen Schlüsselpaar eine gesicherte Übertragung des neuen Schlüssels bewirkt wird. Das ist aber nur möglich, wenn der initiale Schlüssel bereits dem Host zugeordnet ist und diese Zuordnung erhalten bleibt. Der Schlüsselaustausch ist also nur im Rahmen der gesicherten Anwendung möglich und damit unflexibel.

In der Patentschrift US 5,745,576 wird ein Verfahren beschrieben, bei dem ein allen Geräten gemeinsamer Schlüssel, der mit der Gerätenummer modifiziert wird, lediglich zur Schlüsselinitialisierung und zum Schlüsselaustausch verwendet wird. Da die Gerätenummer als bekannt gelten muss, beruht die Sicherheit nur noch auf dem für alle Kryptographiemodule gleichen Initialisierungsschlüssel.

In der US 5,761,306 wird ein asymmetrisches Verschlüsslungsverfahren verwendet. In dem Kryptographiemodul ist der private Schlüssel und in einer Schlüsselzentrale ist der öffentliche Schlüssel gespeichert, und das Verfahren betrifft den Austausch der privaten und öffentlichen Schlüssel. Dabei werden Hashwerte verwendet, um den Austausch zu authentisieren.

In der US 6,442,690 wird gleichfalls vorgeschlagen, public-key Verfahren zu verwenden und jedes Gerät zunächst mit einem, von einer Zentrale signierten öffentlichen Schlüssel und dem zugehörigen privaten Schlüssel auszustatten. Dieses Schlüsselpaar wird dann durch ein anderes Schlüsselpaar ersetzt, wobei die bekannten Eigenschaften von public-key Verfahren ausgenutzt werden.

In allen diesen Fällen muß in dem Kryptographiemodul ein öffentlicher Schlüssel gespeichert sein, und es werden nur solche Schlüsseländerungen akzeptiert, die damit signiert sind. Daher ist es notwendig, den öffentlichen Schlüssel im Kryptographiemodul in einem aufwendigen Verfahren auszutauschen.

Aufgabe der Erfindung ist es daher, ein Verfahren zur Schlüsselverwaltung anzugeben, dass einen sicheren und einfachen Austausch von Schlüsseln für ein Kryptographiemodul ermöglicht.

Die Erfindung löst diese Aufgabe durch ein Verfahren für eine Schlüsselzentrale zum Setzen eines Schlüssels in einem Kryptographiemodul, wobei in dem Kryptographiemodul kein öffentlicher Schlüssel gespeichert ist, indem die Authentizität des neuen Schlüssels durch ein Protokoll gesichert wird, bei dem der öffentliche Schlüssel des Kryptographiemoduls nur verschlüsselt transportiert wird und nur an Schlüsselstellen weitergegeben wird, die ihrerseits Zugang zu dem Kryptographiemodul haben.

Die Erfindung wird für ein Kryptographiemodul beschrieben, das sowohl über symmetrische als auch asymmetrische Verschlüsslung verfügt und einen änderbaren Schlüsselspeicher für ein oder mehrere geheime Schlüssel für symmetrische Verschlüsslung sowie einen permanenten Schlüsselspeicher für den privaten Schlüssel einer asymmetrischen Verschlüsslung hat. Die Lösung gemäß der Erfindung benötigt keinen Speicher für einen öffentlichen Schlüssel, wie er im Stand der Technik zur Sicherung der Authentizität vorgesehen ist. Weiter hat jedes Kryptographiemodul eine eindeutige Gerätenummer, die gleichfalls im Innern gespeichert ist. Diese kann zudem außen aufgedruckt bzw. elektronisch auslesbar sein; zur Erhöhung der Sicherheit wird in einer Variante der Erfindung jedoch nur ein Hashwert der Gerätenummer auslesbar gemacht bzw. außen lesbar angebracht. Bevorzugt umfasst das Kryptographiemodul auch eine gepufferte Tagesuhr, mit der die im folgenden beschriebenen Nachrichten mit einem Zeitstempel versehen werden können, so dass die Gültigkeit der Nachrichten auf ein vordefiniertes Zeitintervall begrenzt werden kann.

Bei symmetrischer Verschlüsslung ist durch die Verwendung desselben Schlüssels für Ver- und Entschlüsslung dieser notwendigerweise geheim zu halten; daher kann jede erfolgreich entschlüsselte Nachricht mit ausreichend prüfbarer Redundanz auch gleichzeitig als authentisch angesehen werden. Da es bei asymmetrischer Verschlüsslung für die Sicherung der Vertraulichkeit nicht notwendig ist, den öffentlichen Schlüssel geheim zu halten, wird allgemein davon ausgegangen, dass zur Sicherung der Authentizität ein zweites Schlüsselpaar notwendig sei, wobei der Absender mit seinem privaten Schüssel signiert und der Empfänger mit dem zugehörigen öffentlichen Schlüssel die Signatur prüft, bevor er die restliche Nachricht mit dem eigenen privaten Schlüssel entschlüsselt. Denn es ist gerade der entscheidende Vorteil der asymmetrischen Verschlüsslung, daß nur noch ein Schlüssel, der private Schlüssel, geheim gehalten werden muss, und der andere, der öffentliche Schlüssel, lediglich authentisch sein muss. Wird hingegen entgegen der herkömmlichen Verwendung auch der "öffentliche" Schlüssel keineswegs veröffentlicht, sondern im Gegenteil vertraulich gehalten, so wird, wie bei symmetrischer Verschlüsslung, durch ein erfolgreiches Entschlüsseln einer Nachricht mit dem privaten Schlüssel gleichzeitig sichergestellt, daß die Nachricht authentisch ist, insoweit sie nur von einer Stelle kommen kann, die über den "öffentlichen" Schlüssel verfügt. Insofern ist der Begriff "öffentlicher Schlüssel" als der nicht-private Schlüssel eines Schlüsselpaars bei einer asymmetrischer Verschlüsslung vom Wortsinn her im Rahmen der vorliegenden Erfindung nicht zutreffend; er wird jedoch auch weiterhin verwendet, da es sich um einen allgemein akzeptierten technischen Begriff handelt.

Von dem Hersteller eines Kryptographiemoduls wird in einem gesicherten Bereich der Produktionsstätte ein individuelles Paar eines öffentlichen und privaten Schlüssels generiert und der private Schlüssel wird in das Kryptographiemodul übertragen, wobei sichergestellt wird, dass keine weiteren Kopien verbleiben. Der öffentliche Schlüssel wird in einer Datenbank unter der Gerätenummer gespeichert und sowohl gegen Datenverlust als auch gegen illegitime Zugriffe geschützt. Bei Verwendung eines Hashwerts wird der Hashwert als Schlüssel verwendet und die Klartext-Gerätenummer zusammen mit dem öffentlichen Schlüssel gespeichert.

Das Kryptographiemodul umfaßt eine Funktion, mit der ein bestimmter geheimer Schlüssel für symmetrische Verschlüsslung geschrieben werden kann. Dieser Schlüssel wird auf dem Weg in das Kryptographiemodul gesichert, indem er durch asymmetrische Verschlüsslung mit dem zu dem im Kryptographiemodul enthaltenen privaten Schlüssel gehörigen öffentlichen Schlüssel verschlüsselt ist. Wie bereits ausgeführt, ist eine erfolgreiche Entschlüsslung gleichzeitig ein Nachweis, daß der Absender im Besitz des öffentlichen Schlüssels war.

Dies ist einerseits der Hersteller des Kryptographiemoduls, der ja originär im Besitz des öffentlichen Schlüssels ist. Zwar muß der Benutzer des Kryptographiemoduls ohnehin ein erhebliches Vertrauen in den Hersteller haben, daß keine Sicherheitsmängel vorhanden sind. Dennoch ist es nicht sinnvoll, die zukünftig für die Sicherheit des Betriebs mit entscheidenden neuen geheimen Schlüssel, die von der Schlüsselstelle erzeugt werden, zunächst an den Hersteller des Kryptographiemoduls zu übermitteln und dort mit dem öffentlichen Schlüssel verschlüsseln zu lassen. Dies ist insbesondere nicht sinnvoll, wenn die Personalisierung und die Herstellung voneinander getrennt sind.

Vielmehr wird durch die Erfindung vorgesehen, dass der öffentliche Schlüssel vom Hersteller des Kryptographiemoduls an den derzeitigen bzw: zukünftigen Betreiber übermittelt wird und dort in einer Schlüsselzentrale, die den neuen geheimen Schlüssel erzeugt, zur Verschlüsslung der Nachricht an das Kryptographiemodul verwendet wird. Diese Übertragung des öffentlichen Schlüssels an das Kryptographiemodul erfolgt gemäß der Erfindung mit gesicherter Authentizität und Vertraulichkeit. Das kann durch bereits existierende Mittel geschehen, beispielsweise durch kryptographisch gesicherte Nachrichten nach dem SOAP-Protokoll oder über HTTPS-Verbindungen.

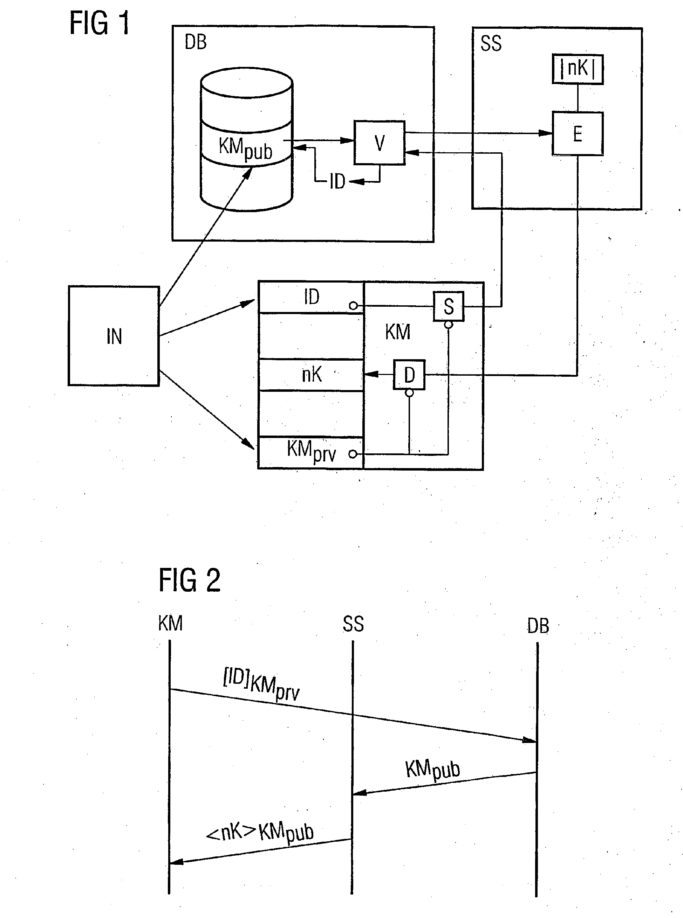

Fig. 1 zeigt eine entsprechende Skizze. Durch die Initialisierung IN wird das Schlüsselpaar KM_{pub} und KMₚᵣᵥ sowie die Gerätenummer ID erzeugt und in die gesicherte Datenbank DB sowie das Kryptographiemodul KM übertragen. Beide Komponenten (KM und DB) befinden sich in einer Sicherheitsumgebung mit dem gleichen gemeinsamen Sicherheitsniveau. Das Kryptographiemodul KM hat einen Speicher für die Gerätenummer ID, den neu zu setzenden Schlüssel nK und den privaten Schlüssel KMₚᵣᵥ. Eine Signierfunktion S des Kryptographiemoduls KM erzeugt einen Identifikationsdatensatz, der die Gerätenummer ID enthält und mit dem privaten Schlüssel KMₚᵣᵥ signiert ist. Außerdem ist das Kryptographiemodul mit einer Entschlüsselungsfunktion D ausgestattet, die einen Datensatz mit dem neuen Schlüssel nK entschlüsseln kann. In der gesicherten Datenbank DB ist der öffentliche Schlüssel KM_{pub} via ID zugreifbar. Ein Vergleicher V entnimmt aus dem von der Signierfunktion S erzeugten Identifikationsdatensatz die Gerätenummer ID, bestimmt damit den öffentlichen Schlüssel KM_{pub}, prüft die Signatur der ID und sendet bei positiver Prüfung den öffentlichen Schlüssel KM_{pub} an die Schlüsselstelle SS. Die Schlüsselstelle SS hat einen Verschlüssler E, mit dem der von ihr erzeugte neue Schlüssel nK mit dem von der gesicherten Datenbank DB erhaltenen öffentlichen Schlüssel KM_{pub} verschlüsselt werden kann. Die Schlüsselstelle SS schickt diesen verschlüsselten Schlüssel nK zum Kryptographiemodul KM, wo er von D entschlüsselt wird.

In den Protokolldiagrammen von Fig. 2 bis Fig. 4 wird die Signierung von Daten durch eckige Klammern mit angehängtem Schlüssel, die Verschlüsslung durch spitze Klammern symbolisiert. Die senkrechten Balken mit den Bezeichnungen KM, SS und DB stehen für den Kryptographiemodul, die Schlüsselstelle und die gesicherte Datenbank.

Fig. 2 zeigt den weiteren Ablauf in symbolischer Form: Das Kryptographiemodul KM sendet den Identifikationsdatensatz [ID]_{KMprv} über die Schlüsselstelle SS an die gesicherte Datenbank DB, welche nach Prüfung den öffentlichen Schlüssel KM_{pub} an die Schlüsselstelle SS zurückschickt. Diese erzeugt den verschlüsselten neuen Schlüssel <nK>_{KMpub}. Der öffentliche Schlüssel KM_{pub} ist somit nicht im Kryptographiemodul, sondern in einer separaten Datenbank gespeichert und dient zur Verschlüsselung des neuen Schlüssels nK, der mit dem privaten Schlüssel im Kryptographiemodul entschlüsselt wird.

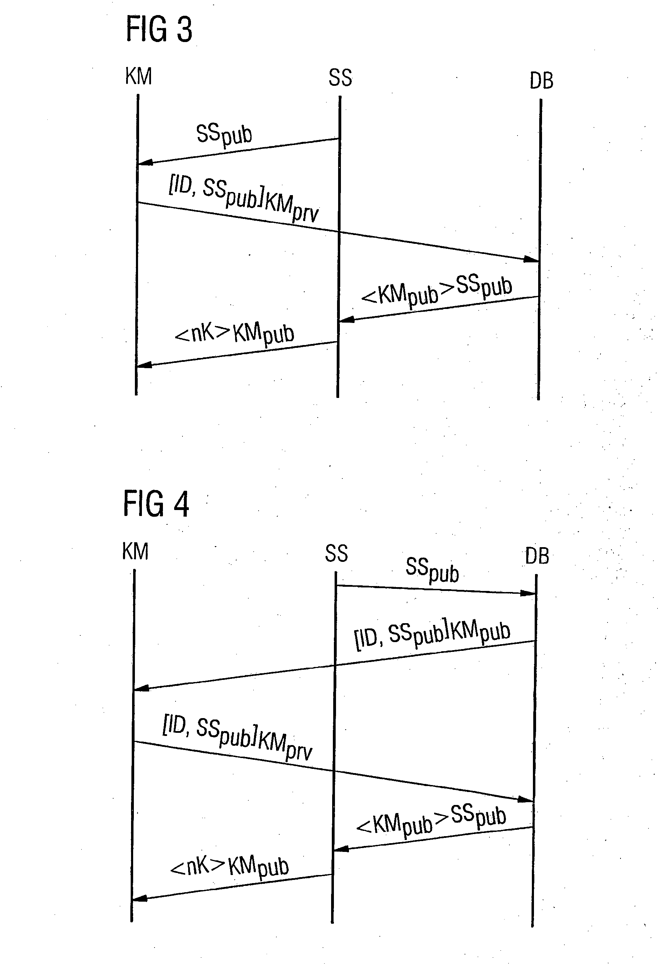

Die bevorzugte Ausführungsform der Erfindung integriert weitere Maßnahmen zur Sicherung von Integrität und Vertraulichkeit. Der Ablauf einer solchen verbesserten Variante ist in Fig. 3 dargestellt.

Hierzu schickt zunächst die Schlüsselstelle SS an das Kryptographiemodul einen Anfragedatensatz, in dem der öffentliche Schlüssel SS_{pub} der Schlüsselstelle enthalten ist, der hier auch nicht vertraulich gehalten werden muss. Dieser öffentliche Schlüssel wird in den Identifizierungsdatensatz [ID, SS_{pub}]_{KMpriv} aufgenommen und zusammen mit der Gerätenummer mit dem privaten Schlüssel des Kryptographiemoduls signiert und an die Schlüsselstelle zurückgeschickt. Da der Datensatz nicht verschlüsselt, sondern signiert ist, kann und wird die Schlüsselstelle prüfen, ob die Gerätenummer und der eigene öffentliche Schlüssel in dem Identifizierungsdatensatz enthalten sind. Eine Überprüfung der Signatur ist noch nicht möglich, da die Schlüsselstelle noch nicht über den öffentlichen Schlüssel KM_{pub} des Kryptographiemoduls verfügt.

Der Identifizierungsdatensatz wird von der Schlüsselstelle über beliebige Verbindungen, insbesondere auch unter Verwendung von Web-Services, als Anfrage an die gesicherte Datenbank DB des Herstellers des Kryptographiemoduls KM geschickt. Dieser verwendet die Gerätenummer ID, um den Datensatz mit dem öffentlichen Schlüssel KM_{pub} aufzufinden, und prüft sodann mit dem aufgefundenen, bislang nur hier vorliegenden öffentlichen Schlüssel KM_{pub} des Kryptographiemoduls die Signatur des Identifizierungsdatensatz. Damit ist sichergestellt, daß der öffentliche Schlüssel KM_{pub} nur an eine Schlüsselstelle SS weitergegeben wird, die Zugang zu dem entsprechenden Kryptographiemodul KM hat.

Ist die Signatur passend, dann wird ein Bereitstellungsdatensatz <KM_{pub}>_{SSpub} erzeugt, in dem der öffentliche Schlüssel des Kryptographiemoduls enthalten ist. Dieser Bereitstellungsdatensatz wird mit dem öffentlichen Schlüssel SS_{pub} der Schlüsselstelle verschlüsselt, optional noch mit einem privaten Schlüssel der gesicherten Datenbank signiert und an die Schlüsselstelle SS zurückgeschickt. Damit ist sichergestellt, daß der öffentliche Schlüssel des Kryptographiemoduls nur der Schlüsselstelle SS zugänglich ist.

Die Schlüsselstelle SS, die über ihren eigenen privaten Schlüssel SSₚᵣᵢᵥ verfügt, kann nunmehr den Bereitstellungsdatensatz entschlüsseln und den öffentlichen Schlüssel KM_{pub} des Kryptographiemoduls entnehmen.

Mit diesem wird, wie zuvor, ein Setzdatensatz <nk>_{KMpub}, der den neuen Schlüssel nK enthält, mit dem öffentlichen Schlüssel KM_{pub} des Kryptographiemoduls KM verschlüsselt und an letzteren gesendet, welcher wie zuvor den Datensatz entschlüsselt und nach Redundanzprüfung den neuen Schlüssel nK einträgt. Nicht notwendig, aber zweckmäßig ist es, die Gerätenummer ID mit in den Setzdatensatz aufzunehmen.

Diese Variante hat noch den Nachteil, daß der öffentliche Schlüssel der Schlüsselstelle ungesichert zum Kryptographiemodul KM übertragen wird, welcher damit nicht prüfen kann, ob die Anfrage berechtigt ist.

In der bevorzugten Weiterbildung nach Fig. 4 wird dies verhindert, indem zunächst die Schlüsselstelle SS von der gesicherten Datenbank DB unter Angabe der Gerätenummer ID den Anfragedatensatz, der den öffentlichen Schlüssel SS_{pub} der Schlüsselstelle enthält, mit dem öffentlichen Schlüssel KM_{pub} des Kryptographiemoduls KM verschlüsseln läßt. Der Anfragedatensatz wird in der Regel die Gerätenummer (ID) mit enthalten; notwendig ist dies jedoch nicht. Zur Sicherung dieser Operation verfügt die gesicherte Datenbank über ein Verzeichnis der öffentlichen Schlüssel der Schlüsselstellen, so daß nur eine registrierte Schlüsselstelle einen verschlüsselten Anfragedatensatz erhalten kann. Das Kryptographiemodul entschlüsselt in dieser Ausführungsform jeden Anfragedatensatz vor der weiteren Bearbeitung mit dem eigenen privaten Schlüssel KMₚᵣᵥ, so daß eine nicht autorisierte Anfrage abgewiesen werden kann und der für die Erlangung des öffentlichen Schlüssels notwendige Identifizierungsdatensatz erst gar nicht erzeugt wird.

In den beiden Ausführungsformen nach Fig. 3 und Fig. 4 ist es zusätzlich zweckmäßig, daß die Schlüsselstelle SS den Identifizierungsdatensatz zusätzlich mit dem eigenen privaten Schlüssel SSₚᵣᵥ signiert und diese Signatur von der gesicherten Datenbank (DB) überprüft wird. Hierzu kann einerseits der in dem Datensatz enthaltene öffentliche Schlüssel dienen. Besser ist es wenn, wie in der Ausführungsform nach Fig. 4, von der gesicherten Datenbank (DB) ein durch andere Mittel gesichertes Verzeichnis der öffentlichen Schlüssel der Schlüsselstellen vorliegt und mit verwendet wird.

Bei einer weiteren Variante der Erfindung nach Fig. 3 oder Fig. 4 verschlüsselt das Kryptographiemodul den Identifizierungsdatensatz mit dem öffentlichen Schlüssel SS_{pub} der Schlüsselstelle SS. Diese entschlüsselt den Identifizierungsdatensatz und signiert ihn vor der Weiterleitung an die gesicherte Datenbank DB. Auf die Signierung kann auch verzichtet werden.

In einer weiteren Variante kann zusätzlich noch die Datenbank DB über ein Schlüsselpaar DBₚᵣᵢᵥ und DB_{pub} verfügen, um den Austausch mit SS, IN und KM noch sicherer zu gestalten. Auch die Initialisierung IN kann über ein Schlüsselpaar INₚᵣᵢᵥ und IN_{pub} für eine noch sichere Verbindung mit DB und KM verfügen.

Wie bereits oben angedeutet, enthält das Kryptographiemodul KM auch eine Tagesuhr und setzt bzw. prüft Zeitstempel in den gesendeten und empfangenen Datensätzen, um eine Wiederholung älterer Datensätze zu verhindern. Zur Unterstützung dieser Funktion enthält das Kryptographiemodul KM ferner ein Register, in dem der Zeitstempel des letzten erzeugten Identifizierungsdatensatzes abgelegt wird und ein Setzdatensatz nur innerhalb einer vorgegebenen Zeitspanne danach akzeptiert wird.

Bei einer anderen Weiterbildung verfügt das Kryptographiemodul KM über einen Zufallszahlengenerator und einen Speicher für eine Zufallszahl. Jeder Identifizierungsdatensatz enthält zusätzlich eine Zufallszahl, die in dem Setzdatensatz wieder enthalten sein muß, damit die Funktion durchgeführt wird. Zudem wird dieser Speicher gelöscht, sobald ein Setzdatensatz empfangen wird, so daß Wiederholungen veralteter Setzdatensätze nicht wirksam sind. Anstelle einer Zufallszahl, für die in der Regel ohnehin ein Generator im Kryptographiemodul KM vorhanden ist, kann auch ein Zähler verwendet werden.

Bekannte Maßnahmen zur Sicherung der Datensätze gegen Kryptoanalyse, wie dem Einfügen von Seriennummern und Zufallszahlen bei Verschlüsslung, sind dem Fachmann geläufig und nicht weiter aufgeführt.

Da die Eigenschaften der zu den Schlüsselspeichern gehörigen Verschlüsslung keine Rolle spielen, können anstelle geheimer Schlüssel für symmetrische Verschlüsslung alternativ oder gemischt die Schlüssel auch für asymmetrische Verschlüsslung gesetzt werden.

## Patentansprüche

1. Verfahren zum gesicherten Übertragen eines neuen Schlüssels (nK) von einer Schlüsselstelle (SS) in ein Kryptographiemodul (KM), das dafür einen beschreibbaren Schlüsselspeicher und zudem einen weiteren Schlüsselspeicher für einen privaten Schlüssel (KMₚᵣᵥ) umfasst,
wobei das Verfahren die folgenden Schritte umfasst:
- in einer gesicherten Umgebung (IN) wird eine Gerätenummer (ID) des Kryptographiemoduls sowie ein Schlüsselpaar aus privatem und öffentlichem Schlüssel (KMprv, KM_{pub}) für ein asymmetrisches Verschlüsslungsverfahren erzeugt, der private Schlüssel (KMₚᵣᵥ) wird in das Kryptographiemodul (KM) übertragen und der öffentliche Schlüssel (KM_{pub}) ausschließlich in einer gegen Fremdzugriffe gesicherten Datenbank (DB) unter der Gerätenummer (ID) abgelegt;
- von der Schlüsselstelle (SS) wird aus dem Kryptögraphiemodul (KM) ein die Gerätenummer (ID) enthaltender, mit dem privaten Schlüssel (KMₚᵣᵥ) signierter erster Datensatz ausgelesen und an die gesicherte Datenbank (DB) übertragen;
- die gesicherte Datenbank (DB) ermittelt mit Hilfe der Gerätenummer (ID) den öffentlichen Schlüssel (KM_{pub}), prüft damit die Signatur des die Gerätenummer (ID) enthaltenden Datensatzes und sendet an die Schlüsseistelle (SS) den öffentlichen Schlüssel (KM_{pub}) zurück;
- die Schlüsselstelle (SS) erzeugt einen Setzdatensatz, der den neuen Schlüssel. (nK) enthält und mit dem öffentlichen Schlüssel (KM_{pub}) des Kryptographiemoduls (KM) verschlüsselt ist, und sendet diesen Setzdatensatz an das Kryptographiemodul (KM);
- das Kryptographiemodul (KM) entschlüsselt den Setzdatensatz, prüft die darin enthaltene Redundanz und setzt den neuen Schlüssel (nK).

2. Verfahren nach Anspruch 1, wobei das Kryptographiemodul (KM) eine Tagesuhr enthält, die ausgetauschten Datensätze Zeitstempel oder Gültigkeits-Zeitintervalle enthalten und die Prüfung von Signatur und Redundanz diese Zeitangaben gegenüber vorgegebenen Schranken umfasst.

3. Verfahren nach Anspruch 1 oder 2, wobei das Kryptographiemodul (KM) ferner einen Speicher für einen Zeitstempel enthält, in dem der Zeitpunkt der Erstellung eines Identifizierungsdatensatzes abgelegt wird, und wobei das Cryptographiemodul nur innerhalb einer vorgegebenen Zeitspanne nach dem letzten gespeicherten Zeitpunkt der Erstellung eines Identifizierungsdatensatzes einen Setzdatensatz ausführt.

4. Verfahren nach einem der vorhergehenden Ansprüche, wobei das Kryptographiemodul (KM) einen weiteren Speicher und Generator für einen Zufallswert umfaßt, diesen in den Datensatz an die Schlüsselställe (SS) einfügt, die den Zufallswert in den Setzdatensatz einfügt und das Kryptographiemodul (KM) bei der Redundanzprüfung den Zufallswert auf Gleichheit überprüft.

5. Verfahren nach einem der vorhergehenden Ansprüche, wobei die Datenbank (DB) über einen öffentlichen Schlüssel (DB_{pub}) und einen privaten Schlüssel (DBₚᵣᵥ) verfügt, mit dem Datensätze, die zwischen der Schlüsselstelle (SS), der Initialisierung (IN) und dem Kryptographiemodul (KM) ausgetauscht werden, verschlüsselt werden können.

6. Verfahren nach einem der vorhergehenden Ansprüche, wobei die Initialisierung (IN) über einen öffentlichen Schlüssel (IN_{pub}) und einen privaten Schlüssel (INₚᵣᵥ) verfügt, mit dem Datensätze, die zwischen der Schlüsselstelle (SS), der Datenbank (DB) und dem Kryptographiemodul (KM) ausgetauscht werden, verschlüsselt werden können.

7. Verfahren nach einem der vorhergehenden Ansprüche, wobei das Verfahren nach einem der Ansprüche 1 bis 6 bei einem Selbstbedienungsgerät, insbesondere einem Geldautomaten eingesetzt wird.

## Claims

1. Method for the secure transmission of a new key (nK) from a key location (SS) to a cryptography module (KM) which comprises, for this purpose, a key memory which can be written to and, in addition, a further key memory for a private key (KMₚᵣᵥ), the method having the following steps:
- a device number (ID) for the cryptography module and a key pair comprising a private key and a public key (KMₚᵥᵣ KM_{pub}) are generated in a secure environment (IN) for an asymmetrical encryption method, the private key (KMₚᵣᵥ) is transmitted to the cryptography module (KM) and the public key (KM_{pub}) is stored exclusively in a database (DB) secured against unauthorized access under the device number (ID);
- the key location (SS) reads a first data record, which contains the device number (ID) and is signed using the private key (KMₚᵣᵥ), from the cryptography module (KM) and transmits it to the secure database (DB) ;
- the secure database (DB) determines the public key (KM_{pub}) with the aid of the device number (ID), uses said key to check the signature of the data record containing the device number (ID) and sends the public key (KM_{pub}) back to the key location (SS);
- the key location (SS) generates a setting data record, which contains the new key (nK) and is encrypted using the public key (KM_{pub}) of the cryptography module (KM), and sends this setting data record to the cryptography module (KM);
- the cryptography module (KM) decrypts the setting data record, checks the redundancy contained therein and sets the new key (nK).

2. Method according to Claim 1, the cryptography module (KM) containing a clock, the data records which have been interchanged containing time stamps or validity time intervals and the process of checking the signature and redundancy comprising this time information with respect to predefined limits.

3. Method according to Claim 1 or 2, the cryptography module (KM) also containing a memory for a time stamp, the time at which an identification data record is created being stored in said memory, and the cryptography module executing a setting data record only within a predetermined period of time after the last stored time at which an identification data record was created.

4. Method according to one of the preceding claims, the cryptography module (KM) comprising a further memory and a generator for a random value, inserting the latter into the data record at that key location (SS) which inserts the random value into the setting data record, and the cryptography module (KM) checking the random value for similarity when checking the redundancy.

5. Method according to one of the preceding claims, the database (DB) having a public key (DB_{pub}) and a private key (DBₚᵣᵥ) which can be used to encrypt data records which are interchanged between the key location (SS), the initialization means (IN) and the cryptography module (KM).

6. Method according to one of the preceding claims, the initialization means (IN) having a public key (IN_{pub}) and a private key (INₚᵣᵥ) which can be used to encrypt data records which are interchanged between the key location (SS), the database (DB) and the cryptography module (KM).

7. Method according to one of the preceding claims, the method according to one of Claims 1 to 6 being used in a self-service device, in particular a cash dispenser.

## Revendications

1. Procédé de transmission sécurisée d'une nouvelle clé (nK) d'un emplacement de clé (SS) dans un module de cryptographie (KM) qui comprend à cet effet une mémoire de clé réinscriptible ainsi qu'une autre mémoire de clé destinée à une clé privée (KMₚᵣᵥ),
dans lequel le procédé comprend les étapes suivantes :
- un numéro d'appareil (ID) du module de cryptographie ainsi qu'une paire de clés constituée de clés privée et publique (KMₚᵣᵥ, KM_{pub}) est généré dans un environnement sécurisé (IN) pour un procédé de cryptage asymétrique, la clé privée (KMₚᵣᵥ) est transmise dans le module de cryptographie (KM) et la clé publique (KM_{pub}) est exclusivement stockée dans une banque de données (DB) sécurisée contre l'accès par des personnes étrangères sous le numéro d'appareil (ID) ;
- un premier enregistrement de données contenant le numéro d'appareil (ID) et signé avec la clé privée (KMₚᵣᵥ) est lu par l'emplacement de clé (SS) à partir du module de cryptographie (KM) et est transmis à la banque de données sécurisée (DB) ;
- la banque de données sécurisée (DB) détermine à l'aide du numéro d'appareil (ID) la clé publique (KM_{pub}), vérifie à l'aide de celle-ci la signature de l'enregistrement de données contenant le numéro d'appareil (ID) et renvoie à l'emplacement de clé (SS) la clé publique (KM_{pub}) ;
- l'emplacement de clé (SS) génère un enregistrement de données de réglage qui contient la nouvelle clé (nK) et qui est est crypté avec la clé publique (KM_{pub}) du module de cryptographie (KM), et envoie cet enregistrement de données de réglage au module de cryptographie (KM) ;
- le module de cryptographie (KM) crypte l'enregistrement de données de réglage, vérifie la redondance contenue dans celui-ci et règle la nouvelle clé (nK).

2. Procédé selon la revendication 1, dans lequel le module de cryptographie (KM) contient une horloge journalière, les enregistrements de données contiennent des marqueurs temporels ou des intervalles de temps de validité et la vérification de la signature et de la redondance par rapport à des limites prédéterminées comprend ces données temporelles.

3. Procédé selon la revendication 1 ou 2, dans lequel le module de cryptographie (KM) contient en outre une mémoire destinée à un marqueur temporel dans laquelle est stocké l'instant de la création d'un enregistrement de données d'identification, et dans lequel le module de n'exécute un enregistrement de données de réglage qu'au cours d'un intervalle de temps prédéterminé faisant suite au dernier instant stocké de la création d'un enregistrement de données d'identification.

4. Procédé selon l'une quelconque des revendications précédentes, dans lequel le module de cryptographie (KM) comprend une autre mémoire et un générateur de valeur aléatoire, fournit cette dernière dans l'enregistrement de données à l'emplacement de clé (SS) qui introduit la valeur aléatoire dans l'enregistrement de données de réglage et le module de cryptographie (KM), lors de la vérification de redondance, vérifie la valeur aléatoire pour déterminer si elle est identique.

5. Procédé selon l'une quelconque des revendications précédentes, dans lequel la banque de données (DB) met à disposition une clé publique (DB_{pub}) et une clé privée (DBₚᵣᵥ) avec laquelle peuvent être cryptés des enregistrements de données qui sont échangés entre l'emplacement de clé (SS), l'initialisation (IN) et le module de cryptographie (KM).

6. Procédé selon l'une quelconque des revendications précédentes, dans lequel l'initialisation (IN) met à disposition une clé publique (IN_{pub}) et une clé privée (INₚᵣᵥ) avec laquelle peuvent être cryptés des enregistrements de données qui sont échangés entre l'emplacement de clé (SS), la banque de données (DB) et le module de cryptographie (KM).

7. Procédé selon l'une quelconque des revendications précédentes, dans lequel le procédé est mis en oeuvre selon l'une quelconque des revendications 1 à 6 dans un appareil en libre-service, notamment un distributeur automatique de billets.
